# EUROPÄISCHE PATENTSCHRIFT

(11) **EP 4 427 308 B1**
(45) Veröffentlichungstag und Bekanntmachung des Hinweises auf die Patenterteilung: **19.08.2026**
(21) Anmeldenummer: 22802891.6
(22) Anmeldetag: 24.10.2022
(51) Int. Cl.: H01R 13/629, H01R 13/639, H01R 13/502, F16B 19/06

(54) **STECKVERBINDERGEHÄUSE MIT VERRIEGELUNGSZAPFEN**
PLUG CONNECTOR HOUSING HAVING LOCKING PINS
BOÎTIER DE CONNECTEUR À BROCHES DE VERROUILLAGE

(30) Priorität: 03.11.2021 DE 102021128633
(43) Veröffentlichungstag der Anmeldung: 11.09.2024
(73) Patentinhaber: HARTING Electric Stiftung & Co. KG, 32339 Espelkamp (DE)
(72) Erfinder: SCHLETH, Marc, 32339 Espelkamp (DE); SCHMIDT, Martin, 32339 Espelkamp (DE)
(86) Internationale Anmeldenummer: PCT/DE2022/100784
(87) Internationale Veröffentlichungsnummer: WO 2023/078500

(56) Entgegenhaltungen:
- WO-A1-2015/120828
- DE-A1- 102019 108 628
- DE-A1- 4 227 078
- DE-B3- 102017 119 057

## Beschreibung

Die Erfindung geht aus von einem Steckverbindergehäuse nach der Gattung des unabhängigen Anspruchs 1. Die Erfindung bezieht sich ebenfalls auf einen Steckverbinder, bei welchem ein solches Steckverbindergehäuse verwendet wird.

Derartige Steckverbindergehäuse, werden auch als Tüllen-, Sockel- oder Kupplungsgehäuse bezeichnet und bestehen in der Regel aus Aluminium oder einer Aluminium-Legierung, insbesondere dann, wenn sie in rauen, industriellen Umgebungen eingesetzt werden.

### Stand der Technik

Die DE 20 2011 105 009 U1 zeigt einen Steckverbinder, der an eine Gerätewand montiert werden kann. Derartige Steckverbinder werden auch als Industriesteckverbinder bezeichnet.

Das hier gezeigte Steckverbindergehäuse weist Verriegelungszapfen auf, an welchen ein U-förmiger Verriegelungsbügel schwenkbar gelagert sein kann. Alternativ können die Verriegelungszapfen auch zum Übergreifen eines solchen Verriegelungsbügels dienen. Ein solcher Steckverbinder ist mit einem Gegensteckverbinder steckbar. Steckverbinder und Gegensteckverbinder sind über den Verriegelungsbügel miteinander verriegelbar. Dabei übergreift der Verriegelungsbügel des Steckverbinders im verriegelten Zustand die am Gegensteckverbindergehäuse angeordneten Verriegelungszapfen. Dadurch werden die Steckverbinder bzw. deren Steckverbindergehäuse fest gegeneinandergepresst.

Oftmals werden als Verriegelungszapfen so genannte Nietbolzen verwendet, wobei das Steckverbindergehäuse und die Nietbolzen aus unterschiedlichen Materialien gefertigt sind. Das Steckverbindergehäuse besteht in der Regel aus einem Aluminiumdruckguss-Material, während der Nietbolzen in der Regel aus stabilitätsgründen aus Stahl besteht. Aufgrund dieser Materialwahl entsteht an den Kontaktbereichen zwischen Steckverbindergehäuse und Verriegelungszapfen bzw. Nietbolzen eine unerwünschte Kontaktkorrosion. Diese Kontaktkorrosion wird insbesondere in rauen Industrieumgebungen begünstigt.

In der EP 3 105 370 A1 wird das Problem der Kontaktkorrosion chemisch bekämpft. Die EP 3 105 370 A1 zeigt ein Steckverbindergehäuse und/oder ein Anbaugehäuse mit oben erwähnten Nietbolzen bzw. Verriegelungszapfen. Die Nietbolzen werden mit einer metallischen Schicht versehen, die die Kontaktkorrosion zwischen dem Gehäusematerial und dem Grundmaterial der Nietbolzen herabsetzt. Derartige chemische Verfahren sind aufwendig und verteuern damit das Steckverbindergehäuse. Es hat sich außerdem herausgestellt, dass die chemische Oberfläche der Nietbolzen durch mechanische Beanspruchung beim Verriegelungsvorgang mit der Zeit abnutzt/ verschleißt und die Kontaktkorrosion nach einer gewissen Zeit dennoch entsteht.

Die DE 10 2019 108 628 A1 zeigt ein Steckverbindergehäuse mit zumindest zwei außenseitig abstehenden und gegenüberliegend angeordneten Verriegelungszapfen, die über eine Kragenhülse am Steckverbindergehäuse angebracht sind.

Die DE 102017 119 057 B3 zeigt ein Steckverbindergehäuse an, welchen in der Nähe der Verriegelungszapfen prismenförmige Konturen angeormt sind, die den Verriegelungsbügel beim Verriegelungsvorgang vom Steckverbindergehäuse beabstanden und damit Reibverschleiß verhindern.

Die DE 4227 078 A1 zeigt ein Steckverbindergehäuse, bei welchem die Verriegelungszapfen von einer drehbaren Schraubhülse umgeben sind.

Die DE 10 2014 101 693 A1 zeigt ein Steckverbindergehäuse, welches zumindest einen Nietbolzen aufweist, der als so genannter Lagerzapfen oder Verriegelungszapfen dient, wobei der Nietbolzen mit einer metallischen Schicht, bestehend
Das Deutsche Patent- und Markenamt hat in der Prioritätsanmeldung zur vorliegenden Anmeldung den folgenden Stand der Technik recherchiert: DE 10 2019 108 628 A1, DE 10 2017 119 057 B3, DE 10 2008 059 583 A1, DE 42 27 078 A1 und WO 2015/ 120 828 A1.

### Aufgabenstellung

Die Aufgabe der Erfindung besteht darin ein zuverlässiges, preisgünstiges und besonders langlebiges Steckverbindergehäuse vorzuschlagen.

Die Aufgabe wird durch den Gegenstand der unabhängigen Ansprüche gelöst.

Vorteilhafte Ausgestaltungen der Erfindung sind in den Unteransprüchen und der folgenden Beschreibung angegeben.

Das erfindungsgemäße Steckverbindergehäuse weist außenseitig zumindest zwei abstehende und gegenüberliegend angeordnete Verriegelungszapfen auf. Auf den Verriegelungszapfen ist ein Verriegelungsbügel schwenkbar lagerbar. Die Verriegelungszapfen können gleichermaßen auch von einem solchen Verriegelungsbügel, zur Verriegelung der Steckverbindung, umgriffen werden. Hierdurch kann situationsbedingt entweder ein Steckverbinder, beispielsweise ausgestattet mit einem Anbaugehäuse, welches an einer Maschine angeschraubt ist, oder ein Gegensteckverbinder, beispielsweise ausgestattet mit einem Tüllengehäuse, mit dem notwendigen Verriegelungsbügel ausgestattet sein.

Vorzugsweise hat das Steckverbindergehäuse einen im Wesentlichen rechteckigen Querschnitt. Derartig ausgeführte Steckverbinder werden auch als Rechtsecksteckverbinder oder Industriesteckverbinder bezeichnet. Hierbei können dann die Langseiten des Steckverbindergehäuses jeweils mit zwei Verriegelungszapfen ausgestattet sein. In einem solchen Fall hätte das Steckverbindergehäuse insgesamt vier Verriegelungszapfen. Ein solches Steckverbindergehäuse könnte demnach auch mit zwei Verriegelungsbügeln ausgestattet sein, die auf gegenüberliegenden Verriegelungszapfen der Langseiten gelagert und über die Schmalseiten des Steckverbindergehäuse schwenkbar sind.

Das erfindungsgemäße Steckverbindergehäuse weist Unterbauelemente auf, die jeweils einem Verriegelungszapfen zugeordnet und zu dessen mechanischer Unterstützung vorgesehen sind.

Erfindungsgemäß sind die Verriegelungszapfen jeweils als Niet- oder Schraubbolzen ausgestaltet. Hierdurch können Niet- oder Schraubbolzen aus einem zum Steckverbindergehäuse unterschiedlichen Material bestehen.

Erfindungsgemäβ sind die Niet- oder Schraubbolzen aus einem nichtmetallischen Material, beispielsweise einem Kunststoff oder einem keramischen Werkstoff, gefertigt. Da das Steckverbindergehäuse vorzugsweise aus einem metallischen Material, insbesondere aus Aluminium oder einer Aluminiumlegierung, gefertigt ist, kann durch die Verwendung nichtmetallischer Niet- oder Schraubbolzen eine Kontaktkorrosion im Befestigungsbereich der Niet- oder Schraubbolzen ausgeschlossen werden.

Erfindungsgemäβ sind die Unterbauelemente schalenförmig ausgebildet und haben dadurch eine mechanisch stabile und tragfähige Struktur. Vorteilhafterweise sind die Unterbauelemente außenseitig am Steckverbindergehäuse angegossen oder angeformt. Dadurch kann das Steckverbindergehäuse in einem einzigen Arbeitsgang mit erfindungsgemäßen Unterbauelementen ausgestattet werden. Hierdurch werden die Fertigungskosten derartiger Steckverbindergehäuse nicht wesentlich erhöht.

Vorteilhaft ist es, wenn das Steckverbindergehäuse und die Unterbauelemente aus dem gleichen Material bestehen. Hierdurch wird insbesondere der Anformprozess in einem einzelnen Arbeitsschritt ermöglicht, beziehungsweise erleichtert.

Vorzugsweise stehen die Unterbauelemente im Wesentlichen senkrecht vom Steckverbindergehäuse ab. Hierdurch können die Unterbauelemente in dieselbe Richtung vom Steckverbindergehäuse abstehen, wie auch die Verriegelungszapfen.

Erfindungsgemäβ sind die Verriegelungszapfen jeweils zumindest teilweise von einer Hülse umgeben. Hierdurch können für den Verriegelungszapfen bzw. den Niet- oder Schraubbolzen unterschiedliche Materialien verwendet werden. Vorzugsweise besteht die Hülse aus einem metallischen Material, welches einen geringen Reibverschleiß aufweist, um viele Verriegelungszyklen gewährleisten zu können. Alternativ kann die Hülse aus Kunststoff bestehen. Vorzugsweise ist die Hülse als Hohlzylinder mit einem kreisförmigen Querschnitt oder als Hohlzylinder mit einem teilprismen- und teilkreisförmigen Querschnitt ausgebildet. Vorzugsweise ist das schalenförmige Unterbauelement der Bauform der Hülse nachempfunden, so dass sich die Hülse formschlüssig am Unterbauelement abstützt. Hierdurch kann eine besonders stabile Verriegelungskontur bzw. ein besonders stabiler Verriegelungsbereich gebildet werden.

### Ausführungsbeispiel

Ein Ausführungsbeispiel der Erfindung ist in den Zeichnungen dargestellt und wird im Folgenden näher erläutert. Es zeigen:
- Fig. 1: eine perspektivische Darstellung eines erfindungsgemäßen Steckverbindergehäuses,
- Fig. 2: eine Explosionsdarstellung eines Verriegelungsbereichs einer ersten Ausführungsform des erfindungsgemäßen Steckverbindergehäuses und
- Fig. 3: eine Explosionsdarstellung eines Verriegelungsbereichs einer zweiten Ausführungsform des erfindungsgemäßen Steckverbindergehäuses.

Die Figuren enthalten teilweise vereinfachte, schematische Darstellungen. Zum Teil werden für gleiche, aber gegebenenfalls nicht identische Elemente identische Bezugszeichen verwendet. Verschiedene Ansichten gleicher Elemente könnten unterschiedlich skaliert sein. Richtungsangaben wie beispielsweise "links", "rechts", "oben" und "unten" sind mit Bezug auf die jeweilige Figur zu verstehen und können in den einzelnen Darstellungen gegenüber dem dargestellten Objekt variieren.

Die Erfindung betrifft ein Steckverbindergehäuse 1 mit zumindest zwei außenseitig abstehenden und gegenüberliegend angeordneten Verriegelungszapfen 3, 3', wobei das Steckverbindergehäuse 1 Unterbauelemente 2, 2' aufweist, die jeweils einem Verriegelungszapfen 3, 3' zugeordnet sind. Die Unterbauelemente 2, 2' unterstützen dabei die Verriegelungszapfen 3, 3' mechanisch während des Verriegelungsvorgangs.

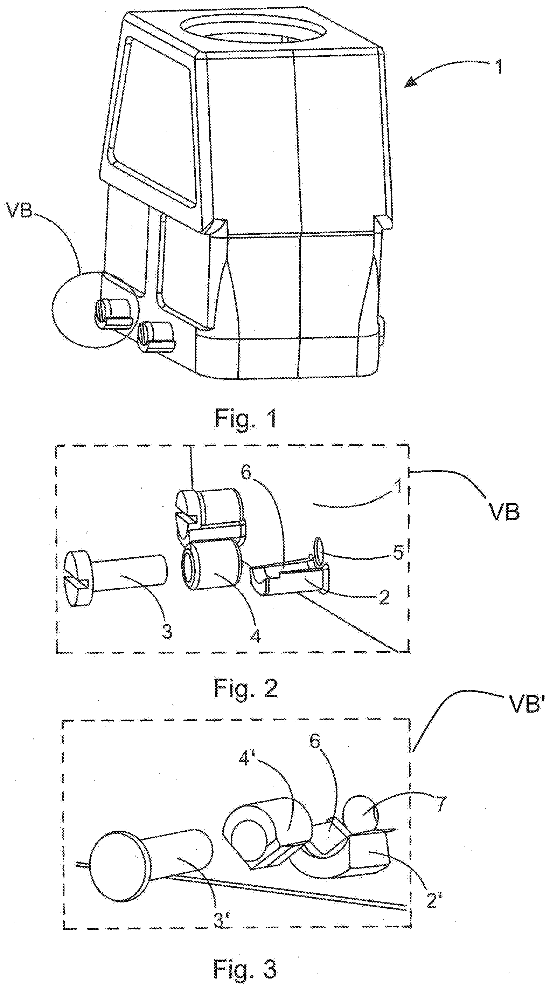

Die Figur 1 zeigt ein erfindungsgemäßes Steckverbindergehäuse 1. Das Steckverbindergehäuse 1 weist einen im Wesentlichen rechteckigen Querschnitt auf und wird in dieser Ausführung vom Fachmann auch als Tüllengehäuse bezeichnet. Entsprechende Anbaugehäuse, die insbesondere an Maschinen als Steckbuchse angebracht sind, sind in den erfindungsrelevanten Aspekten identisch ausgeführt und werden daher nicht gesondert dargestellt.

An den jeweiligen Langseiten des Steckverbindergehäuses 1 sind jeweils zwei Verriegelungsbereiche VB dargestellt, die in den Figuren 2 und 3 als entsprechende Explosionsdarstellung vergrößert dargestellt sind.

Die Verbindungsbereiche VB bestehen jeweils aus einem Unterbauelement 2, einem Verriegelungszapfen 3 und einer darüber geschobenen Hülse 4.

In der in Figur 2 gezeigten, ersten Ausführungsform der Erfindung ist der Verriegelungszapfen als Schraubbolzen 3 dargestellt, der in eine dafür vorgesehene Gewindeöffnung 5 des Steckverbindergehäuse 1 einschraubbar und dadurch daran fixierbar ist. In dieser Ausführungsform hat die um den Schraubbolzen 3 angeordnete Hülse 4 einen kreisförmigen Querschnitt. Das Unterbauelement 2 hat dazu passend einen teilzylindermantelförmigen Aufnahmebereich 6. Das Unterbauelement 2 fängt einen Großteil der Kraft ab, die beim Verriegelungsvorgang am Verriegelungszapfen 2 angreift. Dadurch kann der Verriegelungszapfen 2 auch aus einem weniger stabilen Material als bisher gefertigt sein. Idealerweise wird hierzu ein Material gewählt, welches nicht in eine chemische Reaktion mit dem Material des Gehäuses 1 tritt. Der Abstand der Materialien in der elektrochemischen Spannungsreihe sollte möglichst gering sein.

In der in Figur 3 ist eine zweite Ausführungsform eines erfindungsgemäßen Steckverbindergehäuses 1 dargestellt. Bei dem hier dargestellten Steckverbindergehäuse 1 wird ein Nietbolzen 3' als Verriegelungszapfen verwendet. Der Nietbolzen 3' wird in einer dafür vorgesehenen Nietöffnung 7 befestigt. Die Nietöffnung 7 ist vorteilhaft als Durchgangsöffnung ausgeführt. In der hier dargestellten Ausführungsform hat die über den Nietbolzen 3' aufgeschobene Hülse 4' einen prismen- und teilkreisförmigen Querschnitt. Der prismenförmige Teil ist dem Unterbauelement 2' zugeordnet. Das Unterbauelement 2' hat einen Aufnahmebereich mit einem entsprechenden Querschnitt, in welchen der prismenförmige Bereich der Hülse 4' formschlüssig einlegbar ist. Der teilkreisförmige Querschnitt der Hülse 4' erleichtert den Verriegelungsvorgang, indem der Aufnahmebereich des Verriegelungsbügels (nicht gezeigt) darüber aufgleiten kann. Das Unterbauelement 2' fängt einen Großteil der Kraft ab, die beim Verriegelungsvorgang am Verriegelungszapfen 3' angreift. Dadurch kann der Verriegelungszapfen 3' auch aus einem weniger stabilen Material als bisher gefertigt sein. Idealerweise wird hierzu ein Material gewählt, welches nicht in chemische Reaktion mit dem Material des Gehäuses 1 tritt.

In den hier gezeigten Ausführungsbeispielen sind die Steckverbindergehäuse aus Aluminiumdruckguss-Material gefertigt. Das Unterbauelement 2, 2' ist jeweils auch aus demselben Aluminiumdruckguss-Material gefertigt. Die Niet- bzw.- Schraubbolzen 3, 3' bestehen aus Kunststoff oder Keramik. Ganz besonders vorteilhaft sind jedoch Die Niet- bzw.- Schraubbolzen 3, 3' aus Aluminium, da diese dem Steckverbindergehäusematerial in der elektrochemischen Spannungsreihe am nächsten ist und daher keine Kontaktkorrosion verursacht. Die jeweils verwendeten Hülsen 4, 4' bestehen aus Kunststoff, einem Metall beispielsweise Stahl oder aus einer Keramik.

### Bezugszeichenliste

- 1: Steckverbindergehäuse
- 2, 2': Unterbauelement
- 3: Verriegelungszapfen, Schraubbolzen
- 3': Verriegelungszapfen, Nietbolzen
- 4, 4': Hülse
- 5: Gewindeöffnung
- 6, 6': Aufnahmebereich
- 7: Nietöffnung
- VB: Verriegelungsbereich

## Patentansprüche

1. Steckverbindergehäuse (1) mit zumindest zwei außenseitig abstehenden und gegenüberliegend angeordneten Verriegelungszapfen (3, 3')
**dadurch gekennzeichnet, dass**
die Verriegelungszapfen (3, 3') als Niet- oder Schraubbolzen ausgestaltet sind und aus einem nichtmetallischen Material gefertigt sind.
dass die Verriegelungszapfen (3, 3') jeweils von einer Hülse (4, 4') zumindest teilweise umschlossen sind,
dass außenseitig am Steckverbindergehäuse (1) für jeden Verriegelungszapfen (3, 3') jeweils ein Unterbauelement (2, 2') angegossen oder angeformt ist und
dass die Unterbauelemente (2, 2') schalenförmig zur formschlüssigen Aufnahme der Hülse (4, 4') ausgebildet sind.

2. Steckverbindergehäuse (1) nach Anspruch 1
**dadurch gekennzeichnet, dass**
die Unterbauelemente (2, 2') zur mechanischen Entlastung der Verriegelungszapfen (3, 3') vorgesehen sind.

3. Steckverbindergehäuse (1) nach einem der vorstehenden Ansprüche **dadurch gekennzeichnet, dass**
die Unterbauelemente (2, 2') ein integraler Bestandteil des Steckverbindergehäuses (1) sind.

4. Steckverbindergehäuse (1) nach einem der vorstehenden Ansprüche **dadurch gekennzeichnet, dass**
die Unterbauelemente (2, 2') senkrecht vom Steckverbindergehäuse (1) abstehen.

5. Steckverbindergehäuse (1) nach Anspruch 1
**dadurch gekennzeichnet, dass**
die Hülse (4, 4') als Hohlzylinder mit einem kreisförmigen Querschnitt oder als Hohlzylinder mit einem teilprismen- und teilkreisförmigen Querschnitt ausgebildet ist.

6. Steckverbindergehäuse (1) nach Anspruch 1 oder Anspruch 5
**dadurch gekennzeichnet, dass** sich die Hülse (4, 4') am Unterbauelement (2, 2') abstützt und formschlüssig zumindest teilweise darin aufgenommen ist.

7. Steckverbindergehäuse (1) nach einem der vorstehenden Ansprüche **dadurch gekennzeichnet, dass**
das Steckverbindergehäuse (1) und die Verriegelungszapfen (3, 3') aus unterschiedlichen Materialien gefertigt sind.

8. Steckverbindergehäuse (1) nach einem der vorstehenden Ansprüche **dadurch gekennzeichnet, dass**
das Steckverbindergehäuse (1) und die Unterbauelemente (2, 2') aus dem gleichen Material bestehen.

9. Steckverbinder mit einem Steckverbindergehäuse (1) nach einem der vorstehenden Ansprüche.

## Claims

1. Connector housing (1) with at least two externally protruding and oppositely arranged locking pins (3, 3'), **characterized in that** the locking pins (3, 3') are configured as rivet or screw bolts and are made of a non-metallic material, that the locking pins (3, 3') are each at least partially enclosed by a sleeve (4, 4'), that a substructure element (2, 2') is cast on or molded on the outside of the connector housing (1) for each locking pin (3, 3'), and that the substructure elements (2, 2') are shell-shaped for form-fitting reception of the sleeve (4, 4').

2. Connector housing (1) according to claim 1, **characterized in that** the substructure elements (2, 2') are provided for mechanical relief of the locking pins (3, 3').

3. Connector housing (1) according to one of the preceding claims, **characterized in that** the substructure elements (2, 2') are an integral part of the connector housing (1).

4. Connector housing (1) according to one of the preceding claims, **characterized in that** the substructure elements (2, 2') protrude perpendicularly from the connector housing (1).

5. Connector housing (1) according to claim 1, **characterized in that** the sleeve (4, 4') is configured as a hollow cylinder with a circular cross-section or as a hollow cylinder with a partially prismatic and partially circular cross-section.

6. Connector housing (1) according to claim 1 or claim 5, **characterized in that** the sleeve (4, 4') is supported on the substructure element (2, 2') and is received therein in a form-fitting manner at least partially.

7. Connector housing (1) according to one of the preceding claims, **characterized in that** the connector housing (1) and the locking pins (3, 3') are made of different materials.

8. Connector housing (1) according to one of the preceding claims, **characterized in that** the connector housing (1) and the substructure elements (2, 2') consist of the same material.

9. Connector with a connector housing (1) according to one of the preceding claims.

## Revendications

1. Boîtier de connecteur (1) avec au moins deux broches de verrouillage (3, 3') faisant saillie vers l'extérieur et disposées de manière opposée, **caractérisé en ce que** les broches de verrouillage (3, 3') sont configurées comme des boulons à riveter ou à visser et sont fabriquées en un matériau non métallique, **en ce que** les broches de verrouillage (3, 3') sont chacune au moins partiellement entourées par une douille (4, 4'), **en ce qu'**un élément de sous-structure (2, 2') est moulé ou formé sur la face extérieure du boîtier de connecteur (1) pour chaque broche de verrouillage (3, 3'), et **en ce que** les éléments de sous-structure (2, 2') sont en forme de coque pour la réception par complémentarité de forme de la douille (4, 4').

2. Boîtier de connecteur (1) selon la revendication 1, **caractérisé en ce que** les éléments de sous-structure (2, 2') sont prévus pour le délestage mécanique des broches de verrouillage (3, 3').

3. Boîtier de connecteur (1) selon l'une des revendications précédentes, **caractérisé en ce que** les éléments de sous-structure (2, 2') sont une partie intégrante du boîtier de connecteur (1).

4. Boîtier de connecteur (1) selon l'une des revendications précédentes, **caractérisé en ce que** les éléments de sous-structure (2, 2') font saillie perpendiculairement du boîtier de connecteur (1).

5. Boîtier de connecteur (1) selon la revendication 1, **caractérisé en ce que** la douille (4, 4') est configurée comme un cylindre creux avec une section transversale circulaire ou comme un cylindre creux avec une section transversale partiellement prismatique et partiellement circulaire.

6. Boîtier de connecteur (1) selon la revendication 1 ou la revendication 5, **caractérisé en ce que** la douille (4, 4') est supportée sur l'élément de sous-structure (2, 2') et y est reçue par complémentarité de forme au moins partiellement.

7. Boîtier de connecteur (1) selon l'une des revendications précédentes, **caractérisé en ce que** le boîtier de connecteur (1) et les broches de verrouillage (3, 3') sont fabriqués en des matériaux différents.

8. Boîtier de connecteur (1) selon l'une des revendications précédentes, **caractérisé en ce que** le boîtier de connecteur (1) et les éléments de sous-structure (2, 2') sont constitués du même matériau.

9. Connecteur avec un boîtier de connecteur (1) selon l'une des revendications précédentes.
